Europäisches Patentamt

European Patent Office

Office européen des brevets

(11) Veröffentlichungsnummer: **0 330 202**
**A2**

(12) # EUROPÄISCHE PATENTANMELDUNG

(21) Anmeldenummer: **89103196.5**

(22) Anmeldetag: **23.02.89**

(51) Int. Cl.4: **G06K 7/14 , G06K 19/06**

(30) Priorität: **23.02.88 DE 3805568**

(43) Veröffentlichungstag der Anmeldung:
**30.08.89 Patentblatt 89/35**

(84) Benannte Vertragsstaaten:
**AT BE CH DE ES FR GB GR IT LI LU NL SE**

(71) Anmelder: **LRE RELAIS + ELEKTRONIK GMBH**
**Linprunstrasse 16**
**D-8000 München 2(DE)**

(72) Erfinder: **Eggert, Holger**
**Guberstrasse 6**
**D-8000 München 50(DE)**
Erfinder: **Günnewig, Bernhard**
**Josef-von-Hirsch-Strasse 14**
**D-8033 Planegg(DE)**
Erfinder: **Kraske, Robert**
**Gartenstrasse 8**
**D-8051 Marzling(DE)**

(74) Vertreter: **Schaumburg, Thoenes &**
**Englaender**
**Mauerkircherstrasse 31 Postfach 86 07 48**
**D-8000 München 80(DE)**

(54) **Dateneingabesystem für Messgeräte.**

(57) Bei einem Dateneingabesystem für Meßgeräte, insbesondere medizinische Testgeräte, umfassend eine Datenträgerkarte (10) mit mindestens einer Datenspur (16 bis 22), die aus einer Folge optisch abtastbarer Felder (36) besteht, und eine Leseeinheit mit einer Kartenaufnahme (24), in welche die Datenträgerkarte (10) parallel zur Richtung der Datenspur (16 bis 22) einschiebbar ist, mit einer quer zur Einschubrichtung der Datenträgerkarte (10) gerichteten Schlitzblende (28) und mit mindestens einem dieser zugeordneten Tastelement (30) zum Abtasten der Felder (36) und zum Erzeugen von den Feldern entsprechenden Tastsignalen, die einer Datenverarbeitungseinheit (31) des Meßgerätes zuführbar sind, trägt die Datenträgerkarte (10) eine parallel zur Einschubrichtung gerichtete Taktspur (14) und beiderseits dieser und in einem Abstand von ihr mindestens je eine Datenspur (16 bis 22). Die Schlitzblende (28) umfaßt eine der Anzahl der Spuren (14 bis 22) entsprechende Anzahl separater Blendenfelder (32, 34), die quer zur Einschubrichtung nebeneinander angeordnet sind und sich jeweils annähernd über die Breite der zugeordneten Spur (14 bis 22) erstrecken, wobei jedem Blendenfeld (32, 34) ein Tastelement (30) zugeordnet ist.

Fig. 1

Fig. 3

# Dateneingabesystem für Meßgeräte

Die Erfindung betrifft ein Dateneingabesystem für Meßgeräte, insbesondere medizinische Testgeräte, umfassend eine Datenträgerkarte mit mindestens einer Datenspur, die aus einer Folge optisch abtastbarer Felder besteht, und eine Leseeinheit mit einer Kartenaufnahme, in welche die Datenträgerkarte parallel zur Richtung der Datenspur einschiebbar ist, mit einer quer zur Einschubrichtung der Datenträgerkarte gerichteten Schlitzblende und mit mindestens einem dieser zugeordneten Tastelement zum Abtasten der Felder und zum Erzeugen von den Feldern entsprechenden Tastsignalen, die einer Datenverarbeitungseinheit des Meßgerätes zuführbar sind.

Es sind medizinische Testgeräte zur Untersuchung von Körperflüssigkeiten bekannt, wobei mit der Körperflüssigkeit betropfte Testfelder auf einem Teststreifen in dem Gerät photometrisch untersucht werden. Für die Durchführung der Bemessung ist es erforderlich, dem Gerät bestimmte Daten über die verwendeten Teststreifen und andere Parameter einzugeben. Da diese Geräte auch zur Bedienung durch Patienten oder ungeschultes Personal bestimmt sind, muß sichergestellt sein, daß diese Daten dem Gerät auf einfache und zuverlässige Weise eingegeben werden können.

Hierzu ist einer Teststreifenpackung üblicherweise eine Code-Karte oder Datenträgerkarte beigegeben, welche die relevanten Daten für die Durchführung der Tests enthält. Es ist dabei bekannt, die erforderlichen Daten auf der Datenträgerkarte mit einem Barcode aufzubringen, der dann in dem Gerät abgetastet werden kann. Das Lesen des Barcodes setzt voraus, daß die Karte mit einer bestimmten Geschwindigkeit in das Gerät, d.h. durch die Leseeinheit geschoben wird. Geschieht dies nicht, so werden die Daten nicht oder nicht richtig eingelesen. Zudem ist die Herstellung der bekannten Datenträgerkarten relativ aufwendig.

Der Erfindung liegt die Aufgabe zugrunde, ein Dateneingabesystem der eingangs genannten Art unter Vermeidung der vorstehend genannten Nachteile so weiterzubilden, daß mit einer preiswert herzustellenden Datenträgerkarte ohne die Beachtung besonderer Bedienungsvorschriften die für die Durchführung von Tests erforderlichen Daten zuverlässig dem Testgerät eingegeben werden können.

Diese Aufgabe wird erfindungsgemäß dadurch gelöst, daß die Datenträgerkarte eine parallel zur Einschubrichtung gerichtete Taktspur und beiderseits dieser und in einem Abstand von ihr mindestens je eine Datenspur trägt, und daß die Schlitzblende eine der Anzahl der Spuren entsprechende Anzahl separater Blendenfelder umfaßt, die quer zur Einschubrichtung nebeneinander angeordnet sind und sich jeweils annähernd über die Breite der zugeordneten Spur erstrecken, wobei jedem Blendenfeld ein Tastelement zugeordnet ist.

Die Taktspur stellt sicher, daß die Daten unabhängig von der Einschubgeschwindigkeit der Datenträgerkarte in die Kartenaufnahme zuverlässig gelesen werden können. Dadurch daß die Taktspur in der Mitte zwischen den Datenspuren liegt, ist eine zuverlässige Dateneingabe auch dann möglich, wenn die Karte beim Einschieben leicht verkantet wird. Die Datenträgerkarte läßt sich preiswert herstellen, wenn sie beispielsweise aus transparentem Material besteht, wobei die Taktspur und die Datenspuren jeweils aus einer Folge von transparenten und lichtundurchlässigen Feldern bestehen. Damit läßt sich die Datenträgerkarte durch das Bedrucken einer transparenten Folie preiswert herstellen.

Um das Auftreten von zufälligen Signalen und damit Störungen beim Durchlauf der - in Einschubrichtung betrachtet -vorderen Schnittkante der Datenträgerkarte durch die Leseeinheit zu vermeiden, ist die Datenträgerkante an ihrem vorderen Ende in Form eines unsymmetrischen Daches abgeschrägt, wobei die Taktspur und die Datenspuren mit einer einen definierten Nullpunkt für das Einlesen der Daten festlegenden Startkombination von lichtundurchlässigen Feldern beginnen. Ebenso kann am Ende der Datenspuren und der Taktspur eine Endkonfiguration von Feldern vorgesehen sein, die ein Ende des Datensatzes melden.

Vorzugsweise ist die in Längsrichtung der Spuren, d.h. parallel zur Einschubrichtung gemessene Höhe der Datenfelder größer als die Höhe der zugehörigen Datenblendenfelder. Dadurch ist sichergestellt, daß zu einem gegebenen Zeitpunkt ein Datenfeld das zugehörige Datenblendenfeld vollständig überdeckt und damit das Tastelement eine eindeutige Information erhält. Die Höhe von Datenfeld und Datenblendenfeld können sich beispielsweise wie 3 : 2 verhalten. Die Höhe eines Taktfeldes ist zweckmäßigerweise gleich der Höhe des zugehörigen Taktblendenfeldes und kleiner als die Höhe eines Datenfeldes, wobei jedes Taktfeld - in Spurlängsrichtung betrachtet - zwischen den Rändern der beiderseits von ihm liegenden zugehörigen Datenfelder liegt. Beispielsweise kann - bezogen auf die Einschubrichtung - die Vorlaufkante eines transparenten Taktfeldes auf der Mittellinie der ihm zugeordneten Datenfelder liegen. Damit wird sichergestellt, daß ein Taktimpuls zum Abtasten der beiderseits des Taktfeldes liegenden Datenfelder erst dann erfolgt, wenn die zugehörigen Datenblendenfelder die Datenfelder vollständig überdecken und damit die Tastelemente eine eindeutige Information erhalten und ein deutliches Signal erzeugen können. Um ein eindeutiges Taktsignal zu erzeugen ist es zweckmäßig, wenn sich die Höhen der lichtundurchlässigen und der transparenten Felder in der Taktspur wie 2 : 1 verhalten, wobei die Summe der Höhen eines transparenten und eines lichtundurchlässigen Taktfeldes gleich der Höhe eines Datenfeldes ist.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:

Fig. 1 eine schematische Draufsicht auf eine erfindungsgemäße Datenträgerkarte,

Fig. 2 eine schematische Ansicht der Leseeinheit zum Abtasten der Datenträgerkarte,

Fig. 3 eine vergrößerte Draufsicht auf die in der Leseeinheit angeordnete Schlitzblende,

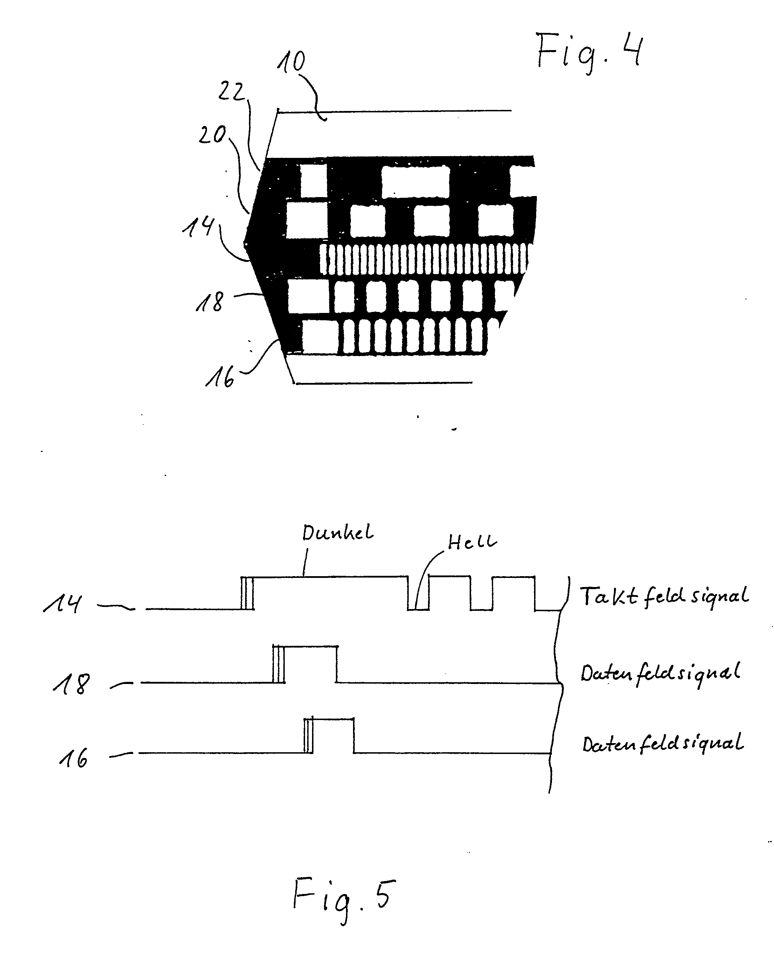

Fig. 4 eine vergrößerte Ansicht des vorderen Endes der Datenkarte mit einer Startkonfiguration der Datenspuren und der Taktspur,

Fig. 5 eine Schema zur Erläuterung der Wirkungsweise der Startkonfiguration,

Fig. 6 eine schematische Darstellung des Zusammenwirkens zwischen den Feldern auf der Datenträgerkarte und den Blendenfeldern beim Einlesen der Daten,

Fig. 7 eine schematische Darstellung des Endabschnittes der Datenträgerkarte und

Fig. 8 eine schematische Darstellung der Takt- und Datenfelder zur Erläuterung der Endkonfiguration auf der Datenträgerkarte.

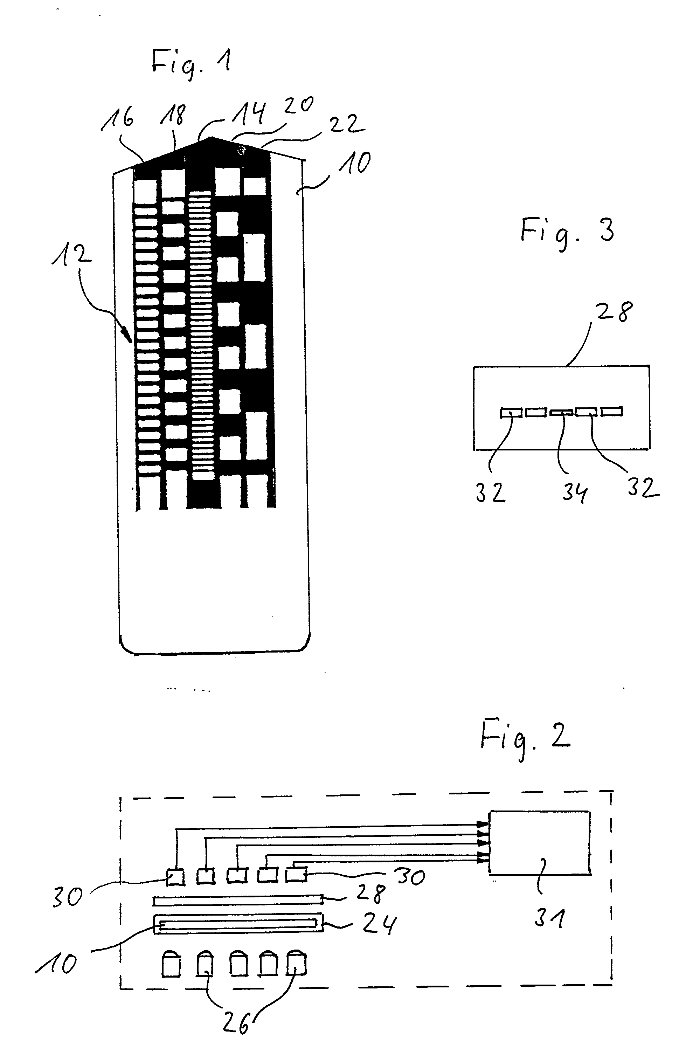

Figur 1 zeigt eine beispielsweise aus einem transparenten Folienmaterial bestehende Datenträgerkarte 10, auf der ein Codestreifen 12 mit lichtundurchlässiger Farbe aufgedruckt ist. Dieser besteht aus einer mittleren Taktspur 14 und beiderseits derselben angeordneten Datenspuren 16, 18, 20 und 22. Die Taktspur umfaßt transparente Taktfelder gleichbleibender Größe, die durch dunkle Abschnitte ebenfalls gleichbleibender Größe voneinander getrennt sind. Die Datenspuren, die untereinander und von der Taktspur jeweils durch einen dunklen Streifen getrennt sind, bestehen jeweils aus einer Folge von unmittelbar aneinandergrenzenden Datenfeldern. Jedem transparenten Taktfeld entspricht eine aus vier Datenfeldern der vier Datenspuren 16, 18, 20 und 22 bestehende Zeile von Datenfeldern, die somit eine vier Bit umfassende Zahl bilden.

Gemäß Figur 2 wird die Datenträgerkarte 10 zum Einlesen der auf ihr gespeicherten Daten in eine Kartenaufnahme 24 eines im übrigen nicht dargestellten Testgerätes eingeschoben. Die zum Abtasten der Datenträgerkarte 10 dienende Leseeinheit des Testgerätes umfaßt eine unterhalb der Kartenaufnahme angeordnete Lichtquelle 26 (oder mehrere nebeneinander angeordnete Lichtquellen), eine oberhalb der Kartenaufnahme 24 angeordnete Schlitzblende 28 und oberhalb dieser angeordnete lichtempfindliche Elemente, beispielsweise Photodioden 30, die jeweils einem Blendenfeld 32 bzw. 34 (Figur 3) der Schlitzblende 28 zugeordnet sind. Wie Figur 3 zeigt, sind die Blendenfelder 32, die den Datenspuren 16 bis 22 zugeordnet sind und das der Taktspur 14 zugeordnete Blendenfeld 34 durch schmale Stege voneinander getrennt.

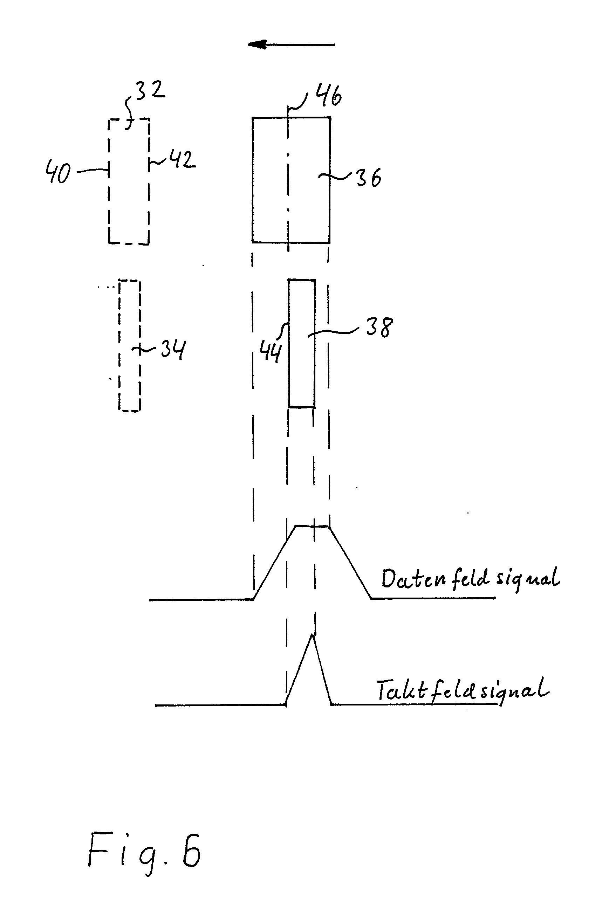

Der Codestreifen 12 beginnt mit einer Startkonfiguration, um die zufälligen Störungen an der vorderen Schnittkante, und damit Fehllesungen aufgrund der Schnittkante zuverlässig zu verhindern. Bei dem dargestellten Ausführungsbeispiel beginnen die Taktspur und die Datenspuren jeweils mit einem langgestreckten dunklen Feld, wobei das dunkle Feld der Taktspur länger ist als die dunklen Felder der Datenspuren. Damit ergibt sich beim Einführen der Datenträgerkarte in die Leseeinheit der aus der Figur 5 ersichtliche Signalverlauf. Erst wenn die Datenspuren von dunkel auf hell geschaltet haben, d.h. die Taststrecke zwischen Lichtquelle 26 und Empfangselement 30 bei jeder Datenspur einmal unterbrochen wurde, wird durch das Ende des dunklen Feldes der Taktspur, d.h. durch das erste transparente Taktfeld der Einlesevorgang gestartet.

Die Anordnung der Taktfelder und der Datenfelder relativ zueinander sowie die Größenverhältnisse zwischen den Daten- und Taktfeldern einerseits und den Datenblenden-und den Taktblendenfeldern andererseits sind in der Figur 6 dargestellt. Die Breite der Blendenfelder 32, 34 entspricht der Breite der zugehörigen Datenfelder 36 bzw. der Taktfelder 38. Die in Einschubrichtung gemessene Höhe des Datenblendenfeldes 32 beträgt 2/3 der Höhe eines Datenfeldes 36. Die Höhe des Taktblendenfeldes 34 ist gleich der Höhe des transparenten Taktfeldes 38. Das Taktblendenfeld 34 ist jedoch schmaler als das Datenblendenfeld 32 und - in Einschubrichtung betrachtet - in der Mitte zwischen dessen Vorderkante 40 und dessen rückwärtiger Kante 42 angeordnet. Die Höhe des transparenten Taktfeldes 38 beträgt 1/3 der Höhe eines Datenfeldes 36, so daß der dunkle Bereich zwischen zwei transparenten Taktfeldern doppelt so hoch ist wie die Höhe eines transparenten Taktfeldes 38. Ein transparentes Taktfeld 38 ist relativ zu den Datenfeldern 36 derselben Datenfeldzeile derart angeordnet, daß seine Vorderkante 44 auf Höhe der Mittellinie 46 der Datenfelder 36 liegt. Bewegen sich somit das dargestellte Datenfeld 36 und das Taktfeld 38 in Einschubrichtung auf die Blendenfelder 32 und 34 zu, so tritt das Taktfeld 38 erst dann in den Bereich des Taktblendenfeldes 34, wenn das Datenblendenfeld 32 bereits vollständig im Bereich eines Datenfeldes 36 liegt. Somit wird ein Taktsignal zum Abtasten der Datenfelder erst dann gegeben, wenn sich ein optimales Datenfeldsignal erhalten läßt. In einem praktischen Ausführungsbeispiel beträgt die Breite der Datenspuren 16 bis 22 und der Taktspur 14 jeweils 2 mm und ihr gegenseitiger Abstand 1 mm. Ein Datenbitist 0,6 mm hoch. Das Datenblendenfeld ist 0,4 mm hoch. Die Höhe des Taktfeldes und des Taktblendenfeldes beträgt jeweils 0,2 mm.

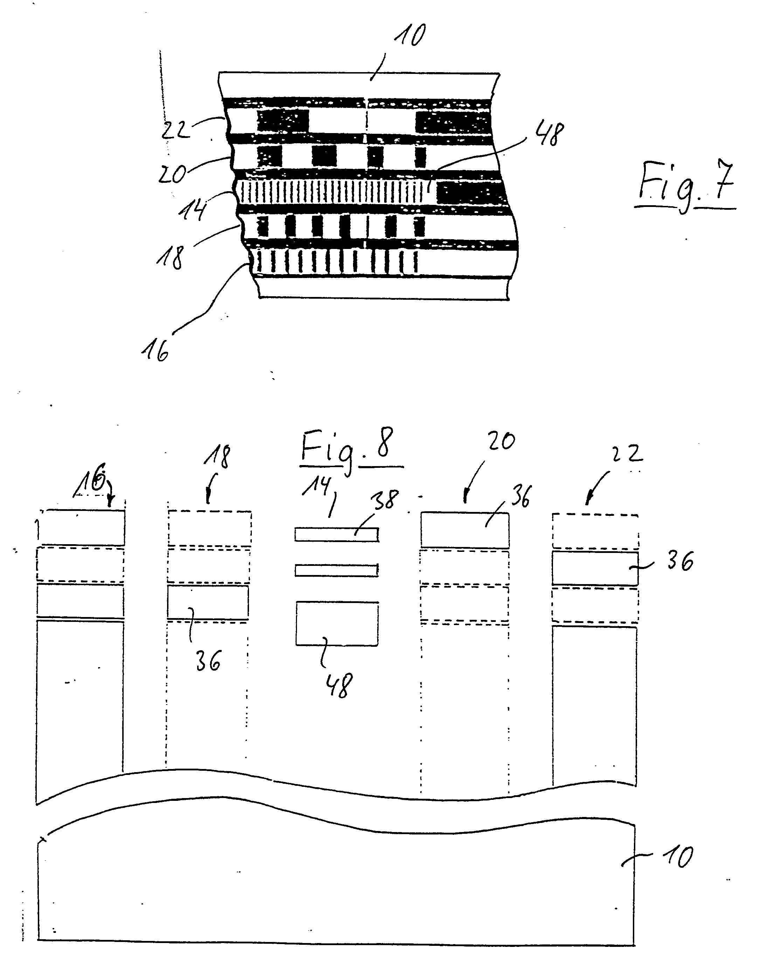

Am Ende des Codestreifens 12 befindet sich eine Stop-Konfiguration von Feldern, wie sie in den Figuren 7 und 8 schematisch angedeutet ist. Ein über die Grenzen der zugehörigen Taktfelder hinaus verlängertes transparentes Taktfeld 48 zeigt an, daß die Datenträgerkarte ihre Endposition erreicht hat. Hierdurch wird sichergestellt, daß die Schlitzblende 28 und die Datenträgerkarte 10 nicht in einer Relativstellung verbleiben, in der die letzten Datenbits nicht definiert sind. Im Anschluß an das letzte Taktbit 48 können dann auf den Datenspuren 16 Informationen positionsunkritisch codiert werden.

Im folgenden wird als nicht einschränkendes Beispiel der Ablauf des Einlesevorganges bei dem vorstehend beschriebenen Dateneingabesystem beschrieben:

1. Nach dem Einschalten des Meßgerätes prüft die Datenverarbeitungseinrichtung 31 (Figur 2) ob eine Datenträgerkarte 10 eingeschoben ist und zeigt den durchzuführenden Test an oder fordert zur Kalibrierung auf.

2. Wenn die Taktspur transparent ist, wird die Lichtquelle 26 der Taktspur schnell gepulst. Eine Anzeige "Code" am Gerät blinkt.

3. Wird die Taktspur undurchsichtig, wird die Lichtquelle der Taktspur auf Dauerlicht geschaltet, wogegen die Lichtquellen der Datenspuren gepulst werden. Die Anzeige "Code" hört auf zu blinken.

4. Die Datenverarbeitungseinrichtung 31 wartet auf die Dunkel-Flanke der Datenspur 18 (Bit 1) und prüft, ob die Taktspur noch dunkel ist.

5. Die Datenverarbeitung 31 wartet auf die Hell-Flanke der Datenspur 18 und prüft gleichzeitig, ob die Datenspur 16 (Bit 0) und die Taktspur noch dunkel sind.

6. Die Datenverarbeitungseinrichtung 31 wartet auf die Hell-Flanke der Datenspur 16 und prüft, ob Datenspur 18 noch hell und Taktspur 14 noch dunkel sind. Die Lichtquellen der Datenspuren werden nun nicht mehr gepulst.

7. Entstehen bei den Schritten 5 oder 6 nicht die gewünschten Informationen, blinkt die Anzeige "Code" wieder auf. Die Schritte 1 bis 6 werden wiederholt.

8. Die Datenverarbeitungseinrichtung 31 wartet nun auf die Hell-Flanke der Taktspur. Mit der jeweiligen Hell-Flanke der nun regelmäßig aufeinanderfolgenden Taktfelder 38 werden die Datenspuren in dem entsprechenden Takt abgefragt. Sind sämtliche Datenbits gelesen, bildet die Datenverarbeitungseinrichtung eine Prüfziffer und testet die eingelesenen Daten. Die Karte befindet sich in ihrer Endposition.

Mit der vorstehend beschriebenen Datenträgerkarte können somit auf einfache und zuverlässige Weise Daten einem Meßgerät zugeführt werden. Beispielsweise kann damit dem Gerät die Reaktionszeit angegeben werden, die nach dem Aufbringen der Körperflüssigkeit auf ein Testfeld verstreichen muß, bis die Messung durchgeführt werden kann.

So muß bei bestimmten Tests zur Untersuchung von Blut beispielsweise das Blut auf dem Teststreifen aufgebracht werden und anschließend eine gewisse Zeit mit den in den Testfeldern enthaltenen Substanzen reagieren. Danach muß das restliche Blut u.U. wieder vom Testfeld abgewischt werden, wonach das Testfeld mit dem Luftsauerstoff eine bestimmte Zeit reagieren muß. Diese Zeiten können von Test zu Test unterschiedlich sein und dem Meßgerät auf die vorstehend beschriebene Weise mitgeteilt werden. Eine in dem Gerät enthaltene Zeitschaltung gibt einen Signalton und macht die Bedienungsperson darauf aufmerksam, daß nun ein weiterer Bedienungsschritt erforderlich ist. Ferner können auf der Datenträgerkarte mathematische Daten gespeichert sein, mit denen die Bedienungsperson mit Hilfe der in dem Gerät angeordneten Datenverarbeitungseinrichtung eine Reaktionskurve generieren kann, wie beispielsweise die Daten eine Polynoms, das das Remissionsvermögen von Teststreifen in Abhängigkeit der Konzentration der zu testenden Substanz beschreibt.

### Ansprüche

1. Dateneingabesystem für Meßgeräte, insbesondere medizinische Testgeräte, umfassend eine Datenträgerkarte (10) mit mindestens einer Datenspur (16 bis 22), die aus einer Folge optisch abtastbarer Felder (36) besteht, und eine Leseeinheit mit einer Kartenaufnahme (24), in welche die Datenträgerkarte (10) parallel zur Richtung der Datenspur (16 bis 22) einschiebbar ist, mit einer quer zur Einschubrichtung der Datenträgerkarte (10) gerichteten Schlitzblende (28) und mit mindestens einem dieser zugeordneten Tastelement (30) zum Abtasten der Felder (36) und zum Erzeugen von den Feldern entsprechende Tastsignalen, die einer Datenverarbeitungseinheit (31) des Meßgerätes zuführbar sind, dadurch **gekennzeichnet,** daß die Datenträgerkarte (10) eine parallel zur Einschubrichtung gerichtete Taktspur (14) und beiderseits dieser und in einem Abstand von ihr mindestens je eine Datenspur (16 bis 22) trägt,und daß die Schlitzblende (28) eine der Anzahl der Spuren (14 bis 22) entsprechende Anzahl separater Blendenfelder (32, 34) umfaßt, die quer zur Einschubrichtung nebeneinander angeordnet sind und sich jeweils annähernd über die Breite der zugeordneten Spur (14 bis 22) erstrecken, wobei jedem Blendenfeld (32, 34) ein Tastelement (30) zugeordnet ist.

2. Dateneingabesystem nach Anspruch 1, dadurch **gekennzeichnet,** daß die Datenträgerkarte (10) aus transparentem Material besteht, wobei die Taktspur (14) und die Datenspuren (16 bis 22) jeweils aus einer Folge von transparenten und lichtundurchlässigen Feldern (36, 38) bestehen.

3. Dateneingabesystem nach Anspruch 1 oder 2, dadurch **gekennzeichnet,** daß die Datenträgerkarte (10) an ihrem - in Einschubrichtung betrachtet - vorderen Ende in Form eines unsymmetrischen Daches abgeschrägt ist, und daß die Taktspur (14) und die Datenspuren (16 bis 22) mit einer einen definierten Nullpunkt für das Einlesen der Daten festlegenden Startkombination von lichtundurchlässigen Feldern beginnen.

4. Dateneingabesystem nach einem der Ansprüche 1 bis 3, dadurch **gekennzeichnet,** daß die in Längsrichtung der Spuren (14 bis 22) gemessene Höhe der Datenfelder (36) größer als die Höhe des zugehörigen Datenblendenfeldes (32) ist.

5. Dateneingabesystem nach Anspruch 4, dadurch **gekennzeichnet,** daß sich die Höhen von Datenfeld (36) und Datenblendenfeld (32) wie 3 : 2 verhalten.

6. Dateneingabesystem nach Anspruch 4 oder 5, dadurch **gekennzeichnet,** daß die Höhe eines Taktfeldes (38) gleich der Höhe des zugehörigen Taktblendenfeldes (34) und kleiner als die Höhe eines Datenfeldes (36) ist, und daß jedes Taktfeld - in Spurlängsrichtung betrachtet - zwischen den Rändern der beiderseits von ihm liegenden zugehörigen Datenfeldern (36) liegt.

7. Dateneingabesystem nach Anspruch 6, dadurch **gekennzeichnet,** daß - bezogen auf die Einschubrichtung -die Vorlaufkante (44) eines transparenten Taktfeldes (38) auf der Mittellinie(46) der ihm zugeordneten Datenfelder (36) liegt.

8. Dateneingabesystem nach Anspruch 6 oder 7, dadurch **gekennzeichnet,** daß die Höhen der lichtundurchlässigen und der transparenten Felder in der Taktspur (14) sich wie 2 : 1 verhalten, wobei die Summe der Höhen eines transparenten und eines lichtundurchlässigen Taktfeldes gleich der Höhe eines Datenfeldes (36) ist.

Fig. 1

Fig. 3

Fig. 2

Fig. 4

Fig. 5

Fig. 6

_Fig. 7_

_Fig. 8_